# EUROPEAN PATENT SPECIFICATION

(11) **EP 4 556 371 B1**
(45) Date of publication and mention of the grant of the patent: **14.10.2026**
(21) Application number: 23307003.6
(22) Date of filing: 20.11.2023
(51) Int. Cl.: B64D 33/04, A01G 15/00, B64D 27/355

(54) **TREATMENT OF EXHAUST GAS IN FUEL-CELL SUPPLIED AIRCRAFT**
BEHANDLUNG VON ABGAS IN EINEM MIT BRENNSTOFFZELLEN VERSORGTEN FLUGZEUG
TRAITEMENT DES GAZ D'ÉCHAPPEMENT DANS UN AVION ALIMENTÉ PAR PILE À COMBUSTIBLE

(43) Date of publication of application: 21.05.2025
(73) Proprietor: Amadeus S.A.S., 06410 Biot (FR)
(72) Inventor: GENTRIC, Philippe, 06480 La Colle Sur Loup (FR)
(74) Representative: Samson & Partner Patentanwälte mbB

(56) References cited:
- DE-A1- 102021 004 031
- GB-A- 2 606 645
- US-B1- 11 635 022

## Description

### FIELD

The present disclosure relates to a method of exhaust-gas treatment during flight of an airplane propelled by an electrical engine supplied by a fuel-cell, and a corresponding apparatus.

### BACKGROUND

Global warming is confirmed by numerous data. According to a literature review by "ISAE-SUPAERO Aviation and Climate: a literature review, S. Delbecq, J. Fontane, N. Gourdain, H. Mugnier, T. Planès et F. Simatos, 2022", the world's surface temperature has risen about 1.09 °C over the decade 2011-2020 compared to the period 1850-1900. Together with other worldwide effects such as a rise in the average sea level of 20 cm between 1901 and 2018), an acidification of oceans (drop in pH of 0.08 between 1950 and 2015) and a melting of the ice caps (40% decrease in the Arctic Sea ice coverage level in September between 1979-1988 and 2010-2019), effectively, no room for doubt on global warming is left today. As scientists observe global warming, they are now able to explain the main underlying mechanisms, resulting in the conclusion that most of the warming observed during the last 50 years is attributable to human activity.

Certain gases of the atmosphere, commonly known as greenhouse gases, absorb part of the thermal radiation emitted by the Earth, converting said thermal radiation into heat. The greenhouse gases are made up of three or more atoms, and include gases such as carbon dioxide CO₂, ozone O₃, methane CH₄ and nitrous oxide N₂O, which absorb the thermal radiation emitted by the Earth in the infra-red spectrum. Gaseous H₂O also significantly absorbs an reemits and thereby reflects infrared radiation.

In 2019, CO₂ emissions represented 65% of anthropogenic greenhouse gas emissions. These emissions are caused by industrial processes, such as steel mills and cement works and by the combustion of fossil fuels, such as petrol, coal and natural gas, representing almost 90% of CO2 emissions. Complying with the carbon budget to limit warming to +1.5 °C or +2 °C is therefore mainly a question of reducing energy-related emissions, which can be achieved by the following three ways:
- efficiency, where a given usage is performed using less energy;
- decarbonisation, where an energy vector is replaced by another one, less CO2-emitting;
- sobriety, where usage is reduced.

The impacts of aviation on the climate are of CO₂ effects and non-CO₂ effects. CO₂ effects correspond to CO₂ emissions from aviation. There are essentially two types of emissions: emissions related to kerosene combustion and emissions over its entire life cycle, i.e. emissions related to its production, refining and transport.

The impact of aviation on the climate is not only limited to CO₂ emissions, as kerosene combustion releases other products, especially water vapour and aerosols (soot and sulphate). These other products also lead to contrail formation.

Lee et al. published a calculation in "The contribution of global aviation to anthropogenic climate forcing for 2000 to 2018", Atmospheric Environment, page 117834, 2020 according to which between the years 1750 and 2018, global aviation would have induced a radiative forcing of 100.9 mWm⁻² (within a 90% confidence interval of 55 to 145 mWm⁻². Non-CO2 effects would be responsible for 66% of radiative forcing, i.e. 66.6 mWm⁻² (within a 90% confidence interval of 21 to 121 mWm⁻²), whereas CO₂ effects would contribute for 34.3 mWm⁻² (within a 90% confidence interval of 28 to 40 mWm⁻²). Contrails (and NOₓ) are the predominant non-CO2 effects since they respectively induced a radiative forcing of 57.4mWm-2 (within a 90% confidence interval of 17 to 98 mWm⁻²) and 17.5 mWm⁻² (within a 90% confidence interval of 0.6 to 29 mWm⁻²).

Currently, the impact of contrails on climate change is the subject of scientific investigation. In general, aircraft contrails (also called vapor trails) are believed to trap outgoing longwave radiation emitted by the earth and atmosphere more than they reflect incoming solar radiation, which would result in a net increase in radiative forcing. For example, Ponater et al. estimated in "On contrail climate sensitivity". Geophysical Research Letters, 32(10), 2005 that the warming effect caused by contrails was between 3.5 mW/m² and 17 mW/m² in 1992.

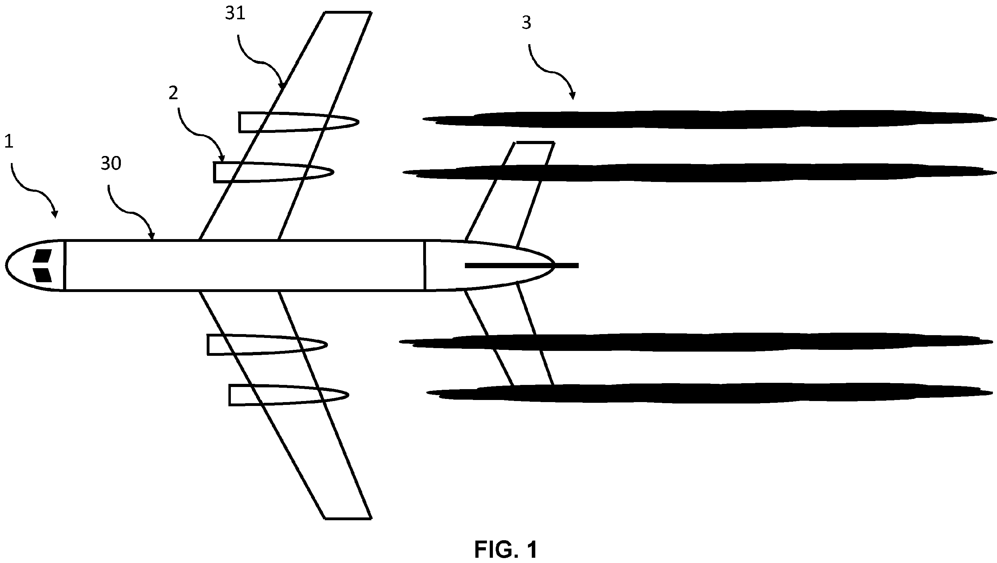

Contrails 3 are thin, linear clouds of ice particles originating behind the engines 2 flying an aircraft 1, as schematically shown in FIG. 1. They are formed the mixing the cold air of the atmosphere with the warm exhaust gas expelled by the engines of the aircraft. For a contrail to form, the water vapour in the plume of the aircraft engines may therefore be supersaturated with respect to liquid water. Some of the droplets formed then freeze almost instantly, depending on their size, to form ice crystals. The trailing vortices which develop in the wake of the aircraft 1 play an important role in the initial phase of development of condensation trails at flight altitude as they capture and trap in their core a large part of the engine effluents (mainly water vapour). The lifetime of these vortices, of around a few minutes over a distance which can reach up to 30 km downstream, mainly depends on the aerodynamic load distribution on the wing and on the horizontal tail, and increases with the aircraft's size and weight.

The COVID-19 pandemic represented an unprecedented opportunity to check the validity of the models against observation by comparing situations with and (almost) without aviation. The difference in cirrus coverage and optical thickness during the almost complete shutdown of air traffic in the couple of months after March 2022 have been accessed. Quaas et al. in "Climate impact of aircraft-induced cirrus assessed from satellite observations before and during COVID-19", Environmental Research Letters, 16(6), 2021 reported a discernible impact of air traffic reduction on cirrus coverage.

The" hydrogen plane" is a technical solution which was conceived in the 1950s as part of an American military project (Suntan project), but then also further developments on this field have been made by NASA, Airbus and Soviet/Russian agencies. A first hydrogen-powered aircraft prototype made its first flight in Russia in 1988 (Tupolev 155).

Hydrogen (H₂) is a promising energy vector for carbon-free propulsion of airplanes. The hydrogen is transformed into electric energy by a fuel cell, and the electric energy supply electric engines propulsing the aircraft.

A hydrogen-powered aircraft generates climate impacts during flight. When supplied by a fuel cell, only exhaust water is generated and the climate impact of said exhaust water depends on the atmospheric conditions in which it is discharged. There are more water emissions which promote the formation of contrails, but potentially induced cirrus has different microphysical and optical properties which are thought to decrease radiative forcing compared to cirrus induced by combustion engine contrails. Taking these two effects into account, Ponater et al. in "Potential of the cryoplane technology to reduce aircraft climate impact: A state-of-the-art assessment", Atmospheric Environment, 40(36), p. 6928-6944, 2006 conclude on a decrease in radiative forcing of around 20%, i.e. the climate impact of hydrogen-powered aircraft contrails is around 20% lower than that of a conventional aircraft. They also study scenarios for transition to a fleet of hydrogen-powered planes with commissioning of such planes from 2015-2020, and come to the conclusion of a reduction in climate impact of between 15 and 50% by 2050, in a context of a rise in traffic.

An alternative to hydrogen as fuel may be ammonia. Compared to hydrogen, ammonia is easier to store. Compared to hydrogen as a fuel, ammonia is more energy efficient, and could be produced, stored and delivered at a lower cost than hydrogen. Ammonia can be converted back to hydrogen to be used to power hydrogen fuel cells, or it may be used directly within high-temperature solid oxide direct ammonia fuel cells to provide efficient power sources that do not emit greenhouse gases. Ammonia to hydrogen conversion can be achieved through the sodium amide process or the catalytic decomposition of ammonia using solid catalysts.

WO 2006/012903 A2 relates to the storage of ammonia in a solid form using metal ammine complexes and delivery there from. WO 2006/012903 A2 also relates to the use of ammonia stored in a solid form as the reducing agent in selective catalytic reduction (SCR) of NOx in exhaust gases from combustion processes, to methods for producing such complexes and to an ammonia delivery device comprising such complexes.

DE 102021 004 031 A1 describes a long-haul commercial aircraft that is electrically powered in cruise mode, with the electrical energy required for this being generated by means of fuel cells. The aircraft comprises a hybrid drive consisting of combustion turbines and fuel cells, which can provide cruise propulsion exclusively on the basis of electrically generated thrust. The hot water portion of the cathode exhaust gas emerging from the fuel cell assembly is no longer released untreated into the environment from an altitude of 8000 meters, but is first cooled by means of a heat exchanger to a temperature level at which it no longer has any potential for the formation of condensation trails.

### SUMMARY

Hence, there is a general demand for aircraft-based systems which further minimize climate impacts during flights.

In this context, methods and systems are presented as defined by the independent claims.

In this respect, according to a first aspect as identified in claim 1, a method for reducing contrails during a flight of an airplane is provided. The airplane propelled by an electrical engine supplied by a fuel-cell. During the flight at the airplane exhaust water produced by the fuel-cell is transformed, by using cold, into ice pieces, the cold being extracted from atmospheric air flow around the airplane during the flight. During the flight, the ice pieces from the airplane are released into the atmosphere; wherein the ice pieces have a size sufficient for them to fall down towards the lower atmosphere rather than to stay in the atmosphere at a height at which the airplane is flying.

According to a second aspect, as identified in claim 7, a contrail reducing system is provided comprising an ice generator suitable to be installed in an airplane for transforming exhaust water produced by a fuel-cell of the airplane into ice pieces during a flight of the airplane using cold extracted from the atmospheric air flow around the airplane during the flight, further comprising an ice-piece releaser suitable to release ice pieces produced by the ice generator from the airplane into the atmosphere during the flight; wherein the ice pieces have a size sufficient for them to fall down towards the lower atmosphere rather than to stay in the atmosphere at the height of flight.

According to a third aspect, an airplane is provided according to claim 13.

Further refinements are set forth by the dependent claims.

These and other objects, embodiments and advantages will become readily apparent to those skilled in the art from the following detailed description of the embodiments having reference to the attached figures, the invention not being limited to any particular embodiments.

### BRIEF DESCRIPTION OF THE FIGURES

Aspects and examples of the present disclosure are described with reference to the following figures, in which:
FIG. 1 illustrates an aircraft during flight, producing contrails in the atmosphere.
FIG. 2 illustrates an airplane releasing ice pieces, as disclosed herein.
FIG. 3 further shows an airplane releasing ice pieces, as disclosed herein.
FIG. 4 depicts aircraft propeller types as described herein.
FIG. 5 depicts a sequence for the transformation of exhaust water into ice pieces and releasing the ice pieces into the atmosphere, as described herein.
FIG. 6 shows various fuel cells as described herein.
FIG. 7 illustrates a proton exchange membrane fuel cell as described herein.
FIG. 8 shows a sequence for transforming exhaust water into ice pieces, as described herein.
FIG. 9 schematically illustrates an ice machine as described herein.

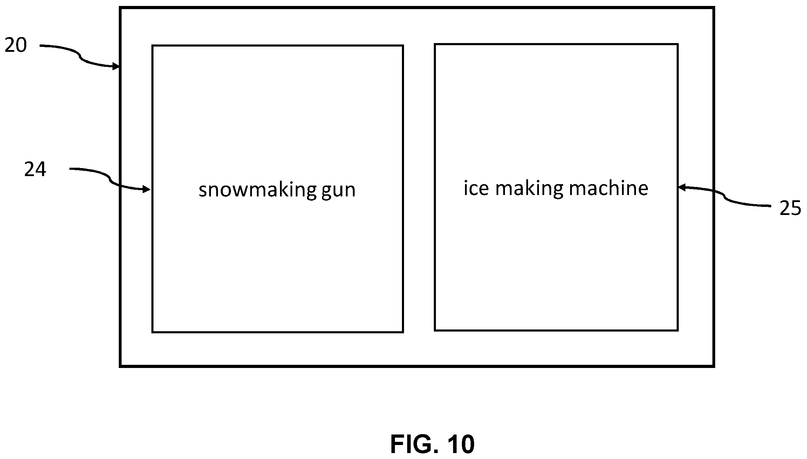

FIG. 10 schematically illustrates further technologies employed for the transformation of exhaust water into ice pieces.
FIG. 11 shows a further sequence for disposing the exhaust water from an airplane.
FIG. 12 shows an airplane for disposing exhaust water into the atmosphere, as described herein.
FIG. 13 schematically depicts a system for the generation and release of ice pieces as described herein.
FIG. 14 schematically depicts a system for cooling an ice machine at the airplane, as described herein.
FIG. 15 illustrates the growing of ice at the ice machine.

### DETAILED DESCRIPTION

The present disclosure provides a method and a system for reducing contrails during a flight of an airplane.

In response to the occurring climate change, the world's commercial aviation industry has committed to carbon neutral growth from 2020 and a reduction of aviation's carbon emissions by half by 2050 compared to those in 2005. Reducing aircraft carbon emissions triggers advancing the concept of electrically powered aircraft, to reduce aircraft energy consumption and/or to reduce the net carbon emissions. The value that electric propulsion might bring may include lower carbon emissions, lower noise, and the enabling of new aircraft configurations with new capabilities.

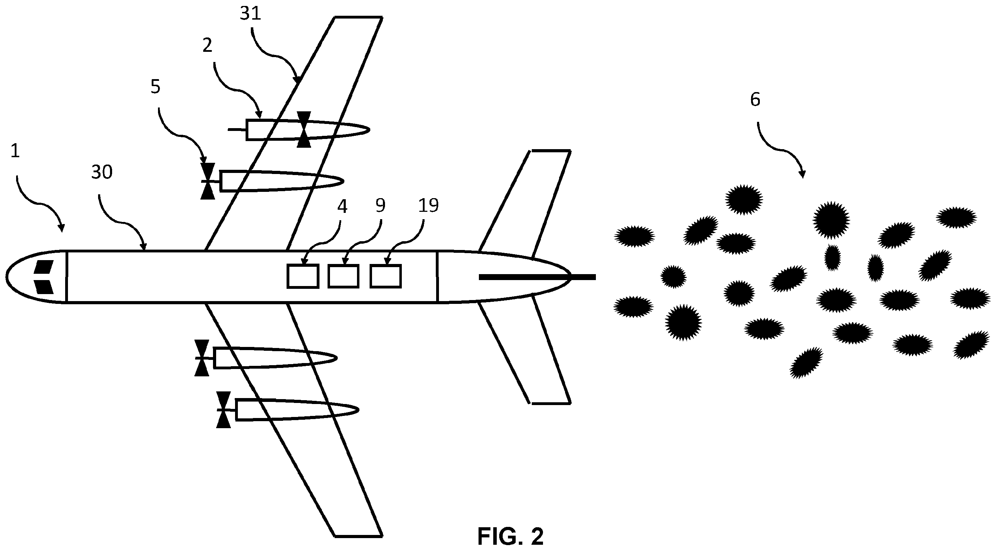

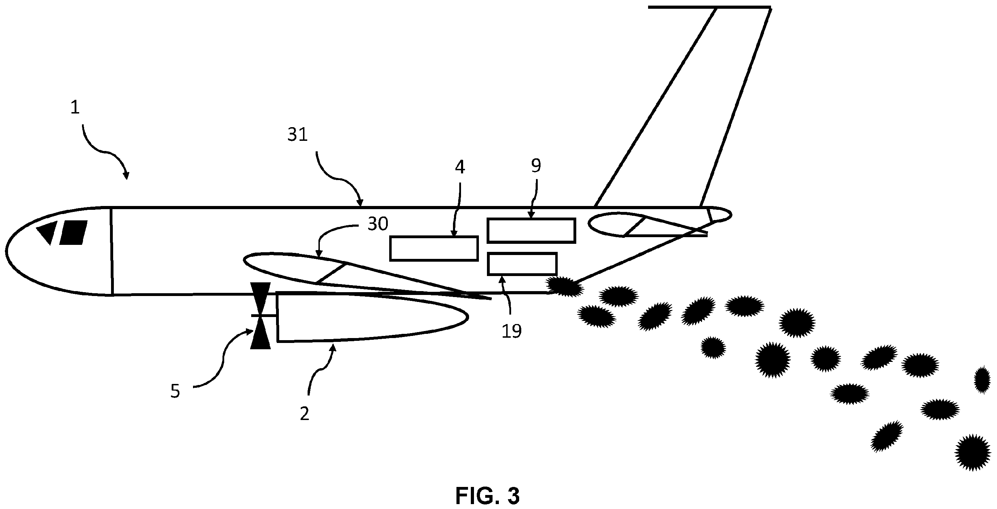

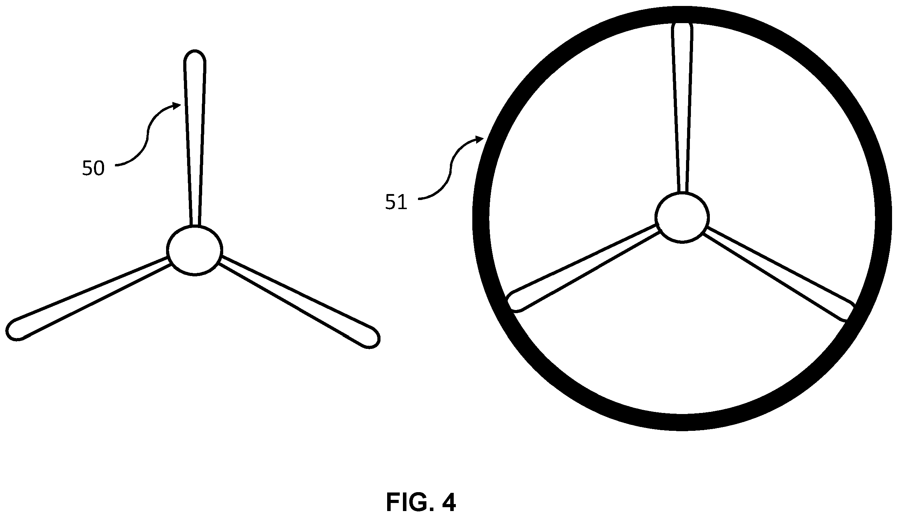

FIGs. 2 and 3 illustrate an airplane 1 propelled by at least one electrical engine 2 supplied by at least one fuel cell 4. The airplane may comprise at least one fuselage 30 and at least one wing 31. In some embodiments and not shown the figure, the airplane may comprise of only at least one flying wing or hybrid flying wing (e. g. Northrop N-1M or YB-35) or any other type of airplane propelled by at least one electrical engine 2 supplied by at least one fuel cell 4. In some embodiments, the electrical engine may comprise one or more aircraft propellers suited to produce the thrust required to generate the lift for the airplane while compensating for drag acting on the wings and the fuselage caused by the atmospheric air. In some embodiment, the at least one or more electrical engine 2 may comprise any other aircraft engine for producing the thrust and being powered by a fuel cell, enabling the aircraft to operate flight at all known cruising altitudes. In some embodiments and as shown in FIG. 4, the aircraft propels may comprise free air propellers 50 or ducted fans 51 to generate the optimal thrust in the operating conditions the airplane is foreseen for.

The airplane 1 may comprise a so-called single-aisle design, with a seating about 130 to 200 passengers with a take-off gross mass of 50 to 90 tonnes, as featured e. g. by Boeing 737 and/or Airbus A320 variants. In other embodiments, airplanes 1 employing designs as featured e. g. by Boeing 747 and/or Airbus A380 variants are comprised. In embodiments, all other types of passenger and/or freight airplanes are comprised. In embodiments, civilian and/or military airplanes are comprised.

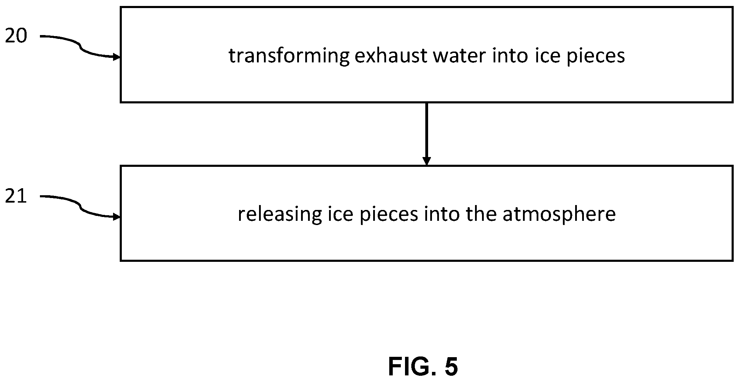

FIG. 5 shown in a flow chart a particular way for the reducing contrails during a flight of an airplane 1 propelled by an electrical engine 2 supplied by a fuel-cell 4. An activity 20 transforms, by using cold, exhaust water produced by the fuel-cell 4 into ice pieces, the cold being extracted from atmospheric air flow around the airplane 1 during the flight. Activity 21, releases, during the flight, the ice pieces from the airplane 1 into the atmosphere. The ice pieces have a size sufficient for them to fall down towards the lower atmosphere rather than to stay in the atmosphere at a height at which the airplane 1 is flying. Referring again to FIGs. 2 and 3, said figures illustrated the releasing 21 of ice pieces 6 from the airplane 1 flying e. g at a height between 5 and 10 km, a height usually flown by propeller driven airplanes. The ice pieces may comprise of ice flakes and/or any type of ice cubes, having a size and/or a mass sufficient to fall into lower altitudes of the atmosphere such as heights between 2000 and 500 km, where they melt to liquid water, due to the higher temperatures prevailing at these altitudes. Order to ensure that the ice pieces entirely melt to water before reaching the ground, where they potentially cause danger to humans, animals and assets, the size of the ice pieces is also sufficiently limited.

This enables a fast and reliable reduction of the amount of exhaust water disposed from the airplanes in the cruising altitudes of the atmospheres, i. e. from altitudes ranging from 7500 m to 12000 m, where contrails usually form, thereby reducing the amount of contrails formed in the atmosphere. Reducing contrails at said altitudes combines both, the effect of reducing contrails in stratospheric regions, where contrails have an enhanced negative impact on the climate and the effect of using as a cold source the low temperatures of the stratosphere, ranging between -15°C and -50°C. As a consequence, the greenhouse effect and the radiative forcing are reduced.

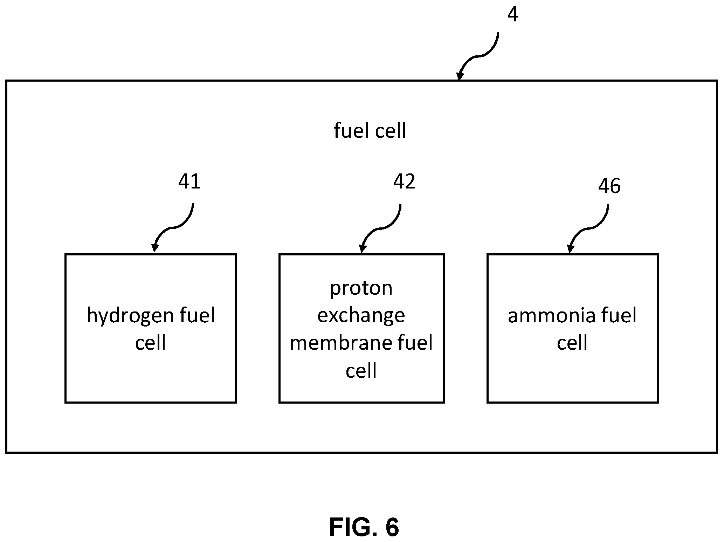

In some embodiments, and as shown in FIG. 6, the fuel-cell 4 comprises a hydrogen-fuel-cell 41 and/or a proton exchange membrane fuel cell 42 and/or an ammonia fuel cell 46. A fuel cell is capable of achieving the conversion from chemical energy to electrical energy without prior conversion to heat and power, as usually done in combustion engines such as jet engines. Fuel cells are thus potentially more efficient, as they are not subject to the inherently poor efficiency of internal combustion engines. Contrary, in combustion engines, the generation of electrical energy from chemical energy sources is mostly carried out by combustion and use of the resulting hot gases to operate a heat engine with a downstream generator. Thus, the chemical energy is first converted by combustion into thermal energy and then into mechanical work, from which also electricity may be finally generated in the generator.

In the following, the operating principles of hydrogen and ammonia fuel cells are explained.

A hydrogen fuel cell is based on the chemical equation:

2 H₂ + O₂ → 2 H₂O

By using so-called green hydrogen generated from renewable electricity, a climate-friendly form of propulsion can be created. Hydrogen, especially when used in combination with a fuel cell, should make it possible to reduce the non-CO₂ effects that account for the greatest climate damage in aviation.

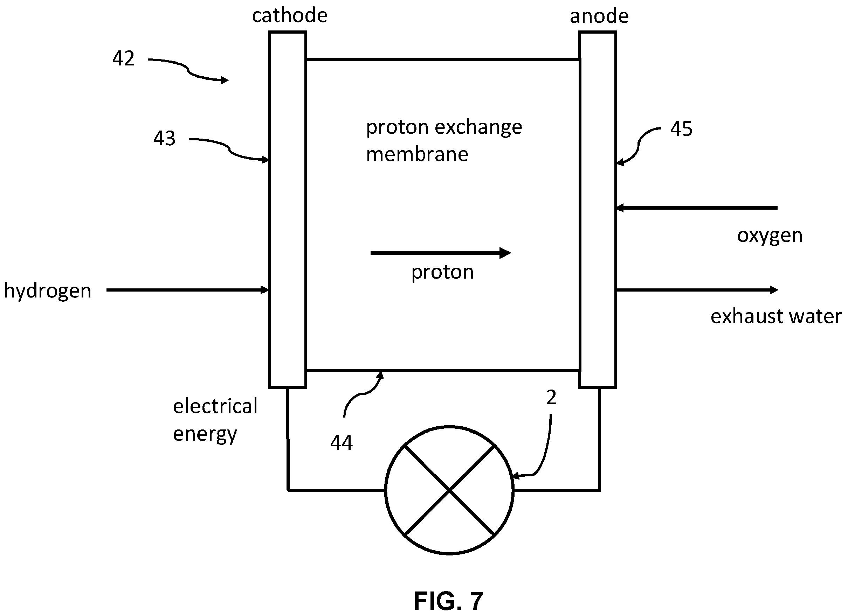

FIG. 7 illustrates a proton exchange membrane fuel cell (PEMFC) 42, comprising a cathode 43, an anode 45 and a proton exchange membrane (PEM) 44. As also shown in FIG. 7, the PEMFC supplies at least one electrical engine 2 for driving at least one airplane propeller 5.

PEMFC 42 are the most important type of fuel cell for many current applications. PEMFC fuel cells achieve an efficiency of about 60 %. The core of the PEMFC 42 is a polymer membrane 44, the so-called proton exchange membrane (PEM), that is permeable only to protons (i.e. only to H⁺ ions). The oxidant, usually atmospheric oxygen, is thus spatially separated from the reducing agent. The fuel, in this case hydrogen, is catalytically oxidized at the anode, releasing electrons to form cations. These pass through the ion exchange membrane into the chamber with the oxidant. The electrons are discharged from the fuel cell and flow to the cathode via an electrical load, for example an incandescent lamp. At the cathode, the oxidant, in this case oxygen, is reduced to anions by absorbing the electrons, which react directly with the hydrogen ions to form water.

Compared to liquid electrolytes, the polymer membrane 44 has a lower chance of leakage. The proton-exchange membrane is commonly made of materials such as perfluorosulfonic acid (sold commercially as Nafion and Aquivion), which minimize gas crossover and short circuiting of the fuel cell. Furthermore, under extreme sub-freezing conditions, such as conditions prevailing at the cruising altitudes of airplanes having temperatures in the range of -20°C to - 70°C, the water produced in fuel cells can freeze in porous layers and flow channels. This freezing water can block gas and fuel transport as well as cover catalyst reaction sites, resulting in a loss of output power and a start-up failure of the fuel cell. However, current PEM fuel cells 42 have been shown to be capable of cold start processes from -20°C. In addition, PEM fuel cells 42 have been shown to be capable of high energy densities up to 39.7 kW/kg, compared to e. g. 2.5 kW/kg for solid oxide fuel cells.

In some embodiments, the fuel cell 4 comprises an ammonia fuel cell 46. Ammonia is an industrially produced basic chemical that is inexpensive and available in large quantities. The energy density of ammonia is 5.4 kWh/kg, being about half that of kerosene, ranging between 8 and 12 kWh/kg. Liquefied ammonia has an energy density comparable to that of gasoline. No carbon dioxide is produced during the conversion of ammonia to hydrogen, and the fuel cell waste products nitrogen and water are environmentally friendly. Ammonia therefore may be a suitable energy source, especially when being produced using power-to-ammonia processes with the help of renewable energy sources or biodegradation processes. Therefore, Ammonia fuel cells could make a contribution to a carbon-free and therefore climate-friendly energy economy.

In some embodiments, an ammonia fuel cell may comprise an ammonia fuel cell comprising a polymer electrolyte fuel cell (PEFC), with the membrane comprising e. g .Nafion 117. Said PEFC may be operated in a temperature range between 20°C and 100°C., therefore being suited to be safely deployed and operated under the conditions of flying airplanes.

PEFC ammonia fuel cells produce water H₂O and nitrogen N₂ as chemical waste products, as shown in the following. At the anode, the following chemical reaction takes place:

2 NH₃ + 6 OH⁻ → N₂ + 6 H₂O + 6 e⁻

At the cathode, the following chemical reaction takes place:

O₂ + 2 H₂O + 4 e⁻ → 4 OH⁻

Resulting in an overall reaction (with water H₂O and nitrogen N₂ as waste products):

4 NH₃ + 3 O₂ → 2 N₂ + 6 H₂O

In some embodiments, ammonia may be stored in cooled tanks at -33 °C or at ambient temperature under a pressure of 8 to 10 bar. This makes the storage and transportation of ammonia relatively easy and inexpensive.

In further embodiments, as described by WO 2006/012903 A2, ammonia may be stored and delivered using metal ammine complexes, e. g. of the form Mₐ(NH₃)ₙX_{z} with M being one or more cations selected e, g, from alkaline earth metals and/or one or more transition metals, such as Mn, Fe, Co, Ni, Cu and/or Zn, and X being one or more anions, selected e. g. fluoride, chloride, bromide, iodide, nitrate, thiocyanate, sulphate, molybdate and/or phosphate ions. This provides aircraft-based reversible storage and delivery capabilities for ammonia in solid form to be supplied as fuel. WO 2006/012903 A2 also describes that powdered ammonia delivery materials having low vapour pressure of ammonia at room temperature may be compacted to a very high density using several different methods for shaping of the material into a desired form. WO 2006/012903 A2 proposes the usage of these materials for the storage of ammonia as a source of ammonia for a selective catalytic reduction of NOx in automotive vehicles powered by Diesel engines. In the present disclosure this storage technology is an example for carrying ammonia in an aircraft, as an alternative to storing it in gaseous or liquid form.

Depending on the metal salt used and the degree of saturation, gaseous and adsorbed ammonia are in chemical equilibrium with each other. The equilibrium point for the absorption of ammonia from the metal salt can be shifted to the gaseous ammonia side with relatively little effort by slightly heating the metal salt saturated with ammonia and/or lowering the ambient pressure, by using e. g. heaters and/or a vacuum pumps installed at the airplane 1. Conversely, to charge the metal salt with ammonia, i.e. to "refuel" it at the ground, e. g. at an airport, the temperature of the unsaturated metal salt would be lowered and/or the pressure of the surrounding ammonia atmosphere increased.

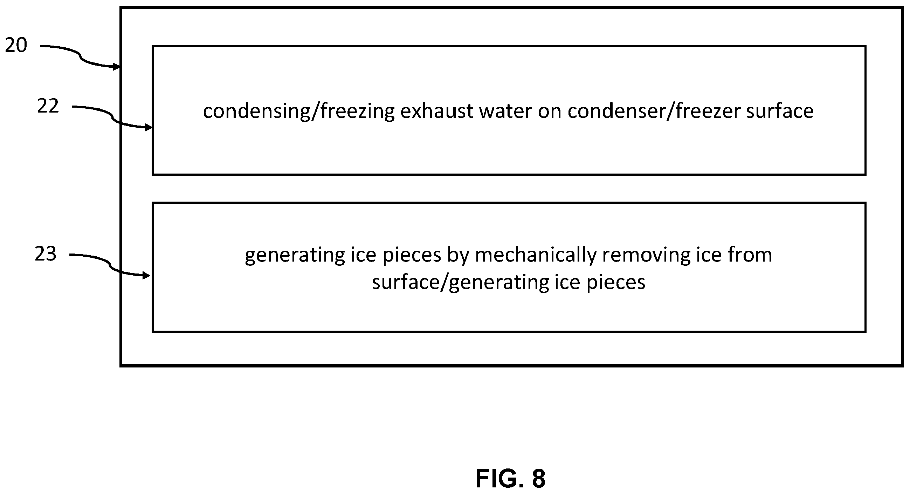

In some embodiments and as shown FIG. 8, transforming 20 of the exhaust water into the ice pieces comprises condensing and freezing 22 the exhaust water on a condenser and freezer surface in thermal contact with the cold, thereby transforming the exhaust water into ice and generating the ice pieces 23 by mechanically removing the ice from the surface and thereby forming the pieces of ice. This provides a simple and flexible method for transforming fuel cell exhaust water into ice, with this method being suitable to be applied in challenging environmental operating conditions such as prevailing at airplanes.

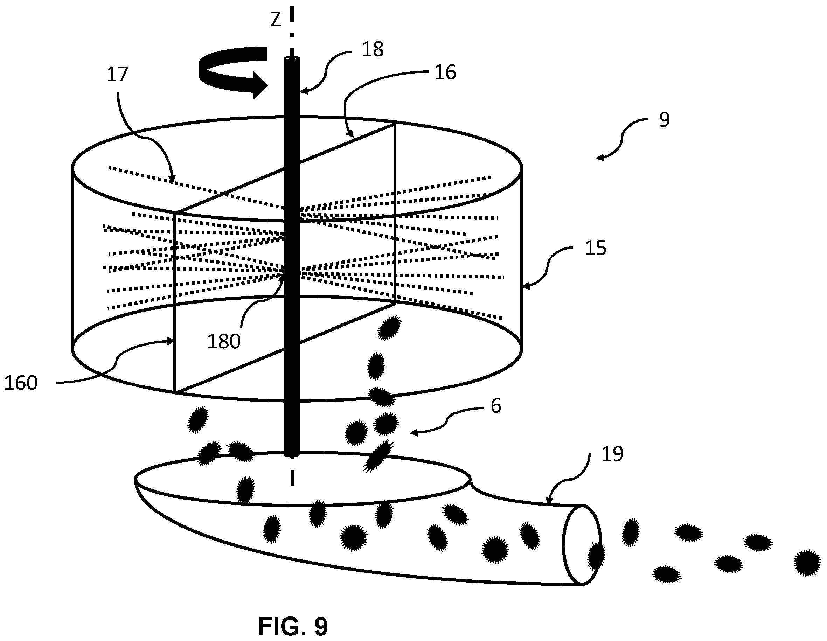

FIG. 9 illustrates an ice-machine 9 comprised by an embodiment of the invention, and as e. g. comprised by the airplane 1 as shown in FIGs. 2, 3, and 12. The ice-machine comprises a condenser and freezer surface 15 defining an inner surface of a cylinder which may be in contact with the cold air of the atmosphere, having a temperature of about -50°C. Surface 15 may also be in contact with a cold carrier, such as a fluid being cooled by the atmospheric air. The exhaust water 17 may be sprayed on the inner side of the surface 15, where it is transformed into layers of ice. Ice pieces are generated by mechanically removing the ice layers from the surface 15. Ice-machine 9 as shown in FIG. 9 provides a robust and compact apparatus for generating pieces of ice from the exhaust water of the fuel cell of the airplanes.

In some embodiments, the mechanical removing of the ice from the surface 15 is performed by scrapping the ice using a blade moving over the surface 15.

Ice-machine 9 may further comprise a blade 16 being rotated around the central axis Z of the cylinder as defined by the surface 15. By this rotation, the edge 160 of the blade is moved over the surface 15, thereby scrapping the ice layers from the surface 15 and forming the pieces of ice. Blade 16 may be fixed to a tube 18 being aligned along the Z-axis, the tube comprising nozzles 180 for spraying the exhaust water onto the surface 15. Scrapping the ice layers from the surface 15 with a blade ensures that the ice layers are fragmented into ice pieces 6.

FIG. 9 also schematically shows an ice releaser 19, as e. g. comprised by the airplane 1 as shown in FIGs. 2, 3, and 12, enabling a continuous and safe release of the generated ice pieces 6 from the airplane 1. In some embodiments, the ice releaser 19 may be comprised by the ice machine 9. The ice releaser 19 may comprise and/or provide any equipment, machines and/or methodologies apparent to a skilled person for being suited to enable a continuous and safe release of the generated ice pieces 6 from the airplane 1.

In some embodiments, transforming 20 the exhaust water into the ice pieces is performed based on snowmaking gun 24 technology and/or ice flake machine technology 25. This enables the execution of the methods of the present disclosure by using established and robust technologies.

A snowmaking gun 24 may comprise of one or more rings of nozzles which inject the exhaust water of the fuel cell into a fan air stream. A separate nozzle or small group of nozzles is fed with a mix of water and compressed air and produces the nucleation points for the snow crystals. The small droplets of water and the tiny ice crystals are then mixed and propelled out of the airplane 1 by a powerful fan, after which they further cool through evaporation in the surrounding atmospheric air as they fall to the lower atmosphere (and to the ground). The crystals of ice act as seeds to make the water droplets freeze at 0°C. Snowmaking guns 24 may produce snow when the wet-bulb temperature of the air is as high as -1°C, however lower temperatures provide better operating conditions for snow gun. This enables the reduction of contrails even at air temperatures as high as -1°C, which are usually found at altitudes of less than 1 km.

In ice making machines 25, such as commercial ice makers the exhaust water 17 is run down e. g. a high nickel content stainless steel evaporator. The surface may be below the freezing temperature of water, usually being prevalent at cruising altitudes of airplanes. Air and undissolved solids will be washed away to such an extent that in horizontal evaporator machines the exhaust water 17 has 98% of the solids removed, resulting in very hard, virtually pure, clear ice. In vertical evaporators the ice is softer, more so if there are actual individual cube cells. Commercial ice machines can make different sizes of ice like flakes, crushed, cubes, octagons, and tubes. When the sheet of ice on the cold surface reaches the desired thickness, the sheet is slid down onto a grid of wires, where the sheet's weight causes it to be broken into the desired ice pieces 6, after which it falls into a storage bin.

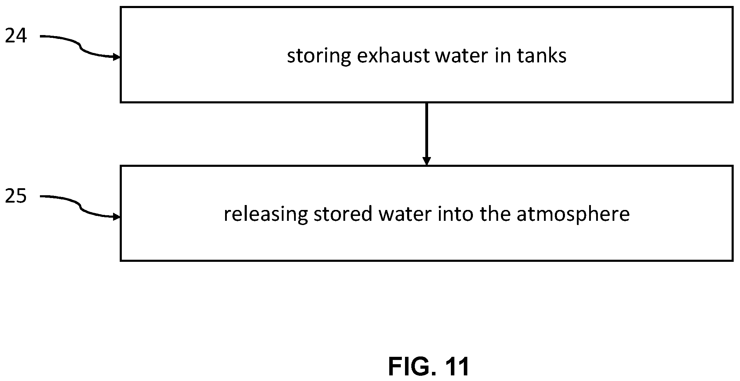

In some embodiments and as shown in FIG. 11, the method further comprises, besides freezing the exhaust water 17, storing 24 condensed or melted exhaust water in one or more tanks comprised by the airplane 1, and releasing 25, during the flight from the airplane 1, at least a part of the water stored in the one or more tanks into the atmosphere when the airplane 1 flies at low altitudes. This enables the release of exhaust water 17 also in such atmospheric altitudes where the ice pieces do not have enough time to melt to water when reaching the ground, possibly creating danger to persons, animals and assets. Releasing of soft water droplets instead would instead create only an artificial rain on the ground, similar or equal of a natural rain, which does not impose any danger.

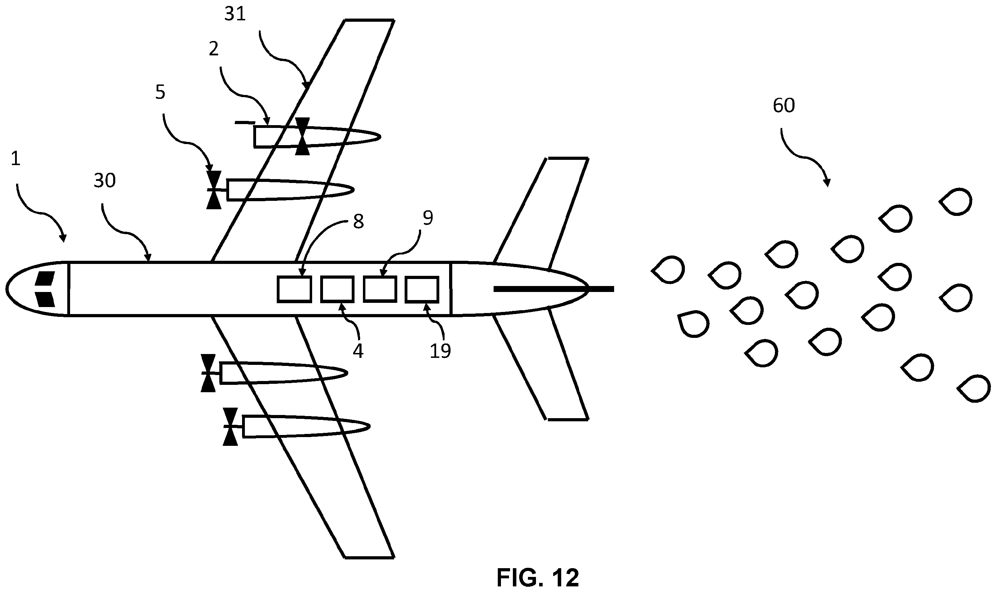

FIG. 12 illustrates airplane 1 as shown in FIGs. 2 and 3, additionally comprising a tank 8 storing the fuel cell exhaust water 17 being subsequently as water droplets 60 into the atmosphere.

Exhaust water 17 may be stored in tanks 8 when the airplane 1 is crossing an atmospheric region having conditions where the contrails may be stable and may remain in the atmosphere for a duration up to tens of minutes, thereby having a prolonged negative impact on the climate. The stored exhaust water 17 may be released from the airplane 1 as soon as the airplane 1 is out of said atmospherical region. Exhaust water 17 in tanks may also be stored in tanks 8 when flight conditions, such as a required supply of energy by the airplane 1 requires a temporary reduction or shutdown of the activities of the ice machine 9.

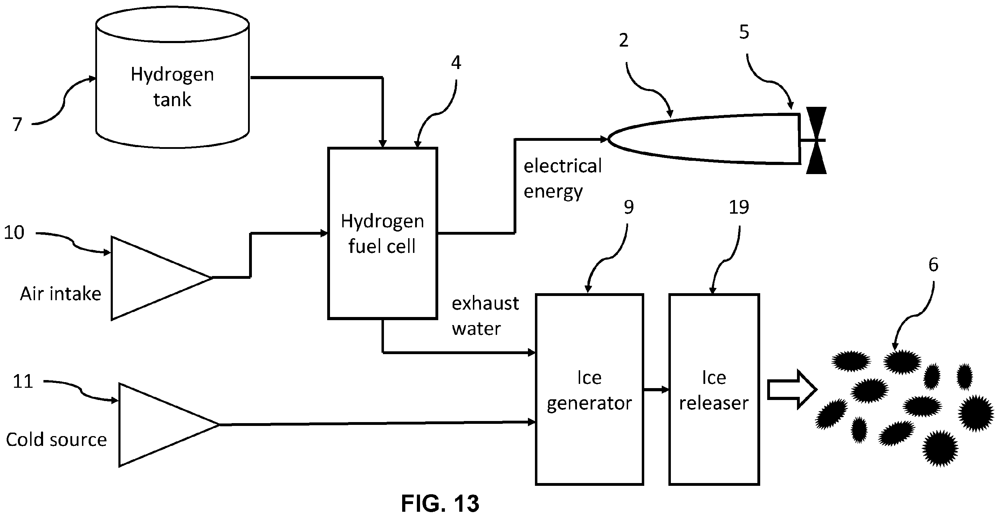

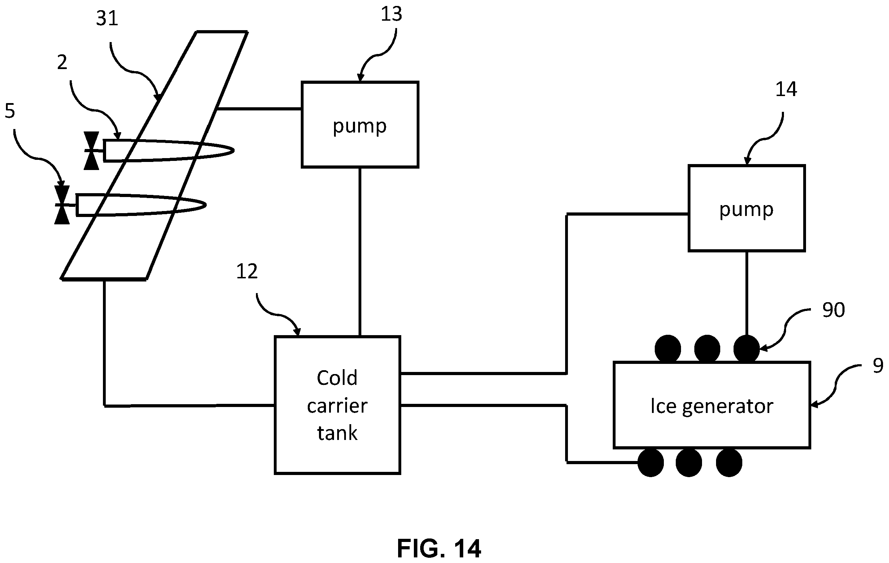

FIGs. 13 and 14 illustrate an embodiment for a system for reducing contrails during a flight of an airplane 1. The system may be implemented on a passenger airplane of the type Airbus A340, but may be also implemented on any other type of aircraft. The system comprises at least one hydrogen tank 7, storing the hydrogen suppling the at least one hydrogen and/or ammonia fuel cell 4, which generates the electrical energy for the at least one electrical machine 2 to drive the at least one propeller 5 of the airplane 1. The oxygen required by the fuel cell for the generation of the electrical energy is taken the atmospheric air provided to the hydrogen and/or ammonia fuel cell 4 by an air intake 10 of the airplane 1. The exhaust water generated by the hydrogen and/or ammonia fuel cell 4 is provided to the ice generator 9, which in turn generates the ice pieces 6 to be released by the airplane 1 by the ice releaser 19.

FIG. 14 illustrates the provision of the cold needed by the ice generator 9 to produce the ice pieces 6. A cold carrier fluid, having a freezing temperature below - 60°C, is circulated by a pump 13 between a cold carrier tank 12 and at least one wing 31 of the airplane 1. The cold atmospheric air streaming around the wing cools the cold carrier fluid to e. g. about a temperature of -30°C. Having been cooled down to such a temperature, the cold carrier fluid is pumped by pump 14 through a tube system 90 of the ice machine 9. The tube system 90 is in thermal contact with the surface 15 of the ice machine 9, enabling cold carrier fluid to cool condenser and freezer surface 15 down to a about the same temperature of the cold carrier fluid. The exhaust water of the at least one fuel cell 4 is then able to condense and freeze to ice at the surface 15.

In the following, an example for the methods provided by the present disclosure is described for the case of an airplane of the type Airbus A320 fuelled by a hydrogen fuel cell. The example as presented in the following calculated the required amount of ice necessary to be released per time unit in order to operate said airplane at cruising altitudes.

As already mentioned, a hydrogen fuel cell is based on the chemical equation:

2 H₂ + O₂ → 2 H₂O

and an ammonia fuel cell is based on the equation:

4 NH₃ + 3 O₂ → 2 N₂ + 6 H₂O

As can be derived from both equations, the ratio of the number of protons (H⁺ ions) producing an amount of water is 2:1, meaning that one proton (H⁺ ion) in involved in the generation of "a half" water molecule.

Based on the ratio as given above, and using the molecular weights of hydrogen H₂ of 2 g/mol, of oxygen O₂ of 32 g/mol and of water of 18 g/mol, this results in that 1 mass unit of protons, produces 9 mass units of water. This means that e. g. 1 ton of hydrogen produces 9 tons of water.

Taking an airplane 1 of the type Airbus A320 which carries at the beginning of a flight around 23 tons of kerosene, in order to have an equivalent amount of energy at its disposal during the flight, the Airbus A320, when e. g. being fuelled by a hydrogen fuel cell, needs to carry around 7 tons of hydrogen. At the end of a flight, when all fuel hydrogen is consumed, a total amount of exhaust water 17 of 63 tons is produced, which had to be transformed into ice pieces 6 and released into the atmosphere.

Assuming a kerosene consumption rate for an Airbus A320 of around 3 tons / hour, which converts to 0,83 kg/s, an equivalent hydrogen consumption rate would be around 0,3 kg / s, resulting in a production rate of exhaust water 17 of around 3 kg/s, which has to be transformed into ice pieces 6 and released into the atmosphere.

Further assuming that the temperature of the exhaust water 17 produced by the hydrogen fuel cell is about 80°C, and using the specific heat of water of 4,2 kJ/kg/K and the latent heat for ice fusion of 334 kJ/kg, the transformation of 3kg exhaust water 17 per second would require that an energy amount of around 2000 kJ per second, or 2 MW, has to be removed by cooling.

Further, using the surface of an Airbus A320 of 600 m², comprising of 200 m² of total wing surface and 400 m² of total fuselage surface, and estimating a wing speed of 100 m/s, the air volume renewal flow for a 1 mm thick layer of atmospheric air on the airplane surface is estimated to be 600 m³/s. Taking into account the air density of 0.5 kg/m³, an equivalent air mass renewal flow of 300 kg/s is estimated.

Assuming further that the temperature gradient in the 1 mm thick layer of atmospheric air is about 10°C (rising from - 50°C to -40°C) when being in contact with the (warm) body of the airplane, and using the thermal capacity of air of 0.7 kJ/kg/K, a heat flow from the airplane to the surrounding atmosphere of around 2100 kW or 2.1 MW is estimated, meaning that a sufficient heat flow is available that can be used for transforming the exhaust water 17 into ice pieces.

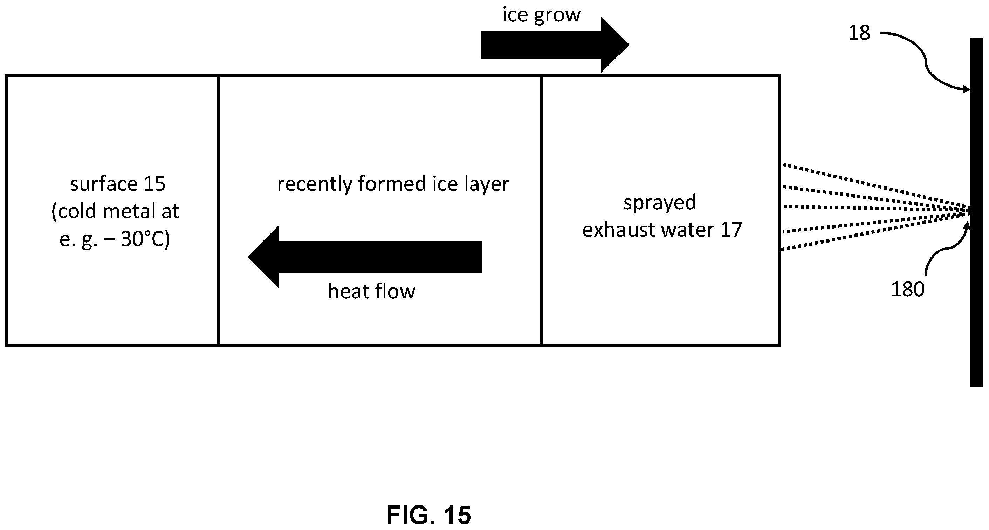

Turning the focus to the ice machine e. g. as illustrated in FIG. 9, it is assumed at this point that the walls forming the surface 17 are made of copper having a thermal conductivity of 384 W/m/k. As shown in FIG. 15, an ice layer forms on condenser and freezer surface 15 due to spraying the exhaust water 17 from e. g. the nozzles 189 of the tube 18. Since the thermal conductivity of ice is around 2 W/m/k, the speed of the growth of the ice layer is limited by the thermal conductivity of the ice layer itself, slowing down the heat transfer from the exhaust water to the surface 15, as shown in FIG. 15.

The mass of a 0. 2 mm thick ice layer being frozen in a surface 17 having an area of 1 m² is 0.2 kg. Using the value for the ice fusion latent heat of 334 kJ/kg, an energy of 67 kJ is needed to freeze said ice layer. Using the ice thermal conductivity value of 2 W/m/K, and a temperature value of the cold surface 17 of -30°C, resulting in a temperature gradient of 30°C with respect to an assumed temperature value of 0°C for the ice layer, a heat flow of 300 kW/m² through said ice layer takes place while freezing the exhaust water 17 sprayed by the nozzles 180 on the surface of the already existing ice layer. This results in a time of around 0.2 seconds to grow said ice layer of 0.2 mm thickness. Correspondingly, the time required to grow a 1 mm thick ice layer is about 5.6 s.

Assuming for the ice machine of FIG. 9 a diameter of 1 m and a height of 1 m, the corresponding area of the condenser and freezer surface 15 would be around 3.1 m². This means, that when a 0.2 mm thick ice layer is grown within 0.2 s, a total mass of 630 g ice would be produced. Further assuming a full rotation of the blade 16 within said 0.2 s, resulting in a total scrapping of the 630 g ice layer from the surface 15 and the generation of a corresponding mass of ice pieces 6, five full rotations would take place within one second, scrapping five ice lavers of 0.2 mm thickness a 630 g and producing a total mass of ice in the form of ice pieces 6 of around 3.1 kg per second. Therefore, an ice machine of FIG. 9 with the aforementioned structural and functional characteristics has sufficient capacity to transform the required 3 kg/s exhaust water into ice pieces 6.

With regard to the releasing of the ice pieces 6 from the airplane 1, assuming a near spherical shape of the ice pieces and a diameter of 0,2 mm, an amount of 18 million ice pieces per second would be released from the airplane 1. Said ice pieces 6 may be compressed to form lager ice pieces in order to guarantee their falling into lower parts of the atmosphere. If said ice pieces would have e. g. a diameter if 1 cm, around 150 ice pieces 6 would have to be released from the airplane 1 per second. The size of the ice pieces 6 may be chosen in such a way that their previous complete melting into water is ensured before the ice pieces 6 hit the ground.

An ice piece 6 may have a diameter smaller than 1 cm, in order not to cause any danger when hitting the ground. Using as approximation the falling speed being proportional to square root of diameter, resulting in the kinetic energy of the falling ice piece 6 being proportional to fourth power of the diameter of the ice piece 6, an ice piece 6 with a diameter of e. g. 1 cm has a falling speed of 50 km/h and an impact energy of 0.05 Joule (in comparison with an ice piece 6 having a diameter of 2 cm with a falling speed of 70 km/h and an impact energy of 0.7 Joule).

In the case the ice machine 15 as shown in FIG. 9 suffers an operation failure during the flight, a scenario for this case would be to release the exhaust water 17 into the atmosphere as liquid water, thereby producing contrails 3, however, no serious security risk would emerge for the airplane 1, its passengers and personnel. In the case the ice machine 15 and the flow of the exhaust water from the at least one fuel cell 4 to the ice machine 15 fails, e. g. an emergency valve installed at the at least one fuel cell 4 may be operated in order to directly release the exhaust water into the atmosphere.

It should be appreciated that while particular embodiments and variations have been described herein, further modifications within the scope of the appended claims will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has been described in considerable detail, the invention is only limited by the scope of the appended claims. Additional advantages and modifications will readily appear to those skilled in the art. The invention in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A method for reducing contrails during a flight of an airplane (1), the airplane (1) propelled by an electrical engine (2) supplied by a fuel-cell (4), the method providing, during the flight at the airplane (1):
- transforming, by using cold, exhaust water (17) produced by the fuel-cell (4) into ice pieces (6), the cold being extracted from atmospheric air flow around the airplane (1) during the flight;
- releasing, during the flight, the ice pieces (6) from the airplane into the atmosphere;
- wherein the ice pieces (6) have a size sufficient for them to fall down towards the lower atmosphere rather than to stay in the atmosphere at a height at which the airplane (1) is flying.

2. The method of claim 1, wherein the fuel-cell (4) comprises a hydrogen-fuel-cell (41) and/or a proton exchange membrane fuel cell (42) and/or an ammonia fuel cell (46).

3. The method of any one of the preceding claims, wherein transforming of the exhaust water (17) into the ice pieces (6) comprises:
- condensing and freezing the exhaust water (17) on a condenser and freezer surface (15) in thermal contact with the cold, thereby transforming the exhaust water (17) into ice;
- generating the ice pieces (6) by mechanically removing the ice from the surface (15) and thereby forming the pieces of ice.

4. The method of claim 3, wherein the mechanical removing of the ice from the surface (15) is performed by scrapping the ice using a blade (16) moving over the surface (15).

5. The method of any one of the preceding claims, wherein transforming the exhaust water (17) into the ice pieces (6) is performed based on snowmaking gun technology and/or ice flake machine technology.

6. The method of any one of the preceding claims, further comprising:
- besides freezing the exhaust water (17), storing condensed or melted exhaust water (17) in one or more tanks (8) comprised by the airplane (1),
- releasing, during the flight from the airplane (1), at least a part of the water stored in the one or more tanks (8) into the atmosphere when the airplane (1) flies at low altitudes.

7. A contrail reducing system, comprising
- an ice generator (9) suitable to be installed in an airplane (1) for transforming exhaust water (17) produced by a fuel-cell (4) of the airplane (1) into ice pieces (6) during a flight of the airplane (1) using cold extracted from the atmospheric air flow around the airplane (1) during the flight;
- an ice-piece releaser (19) suitable to release ice pieces (6) produced by the ice generator (9) from the airplane (1) into the atmosphere during the flight;
- wherein the ice pieces (6) have a size sufficient for them to fall down towards the lower atmosphere rather than to stay in the atmosphere at the height of flight.

8. The contrail reducing system of claim 7, wherein the fuel-cell (4) comprises a hydrogen-fuel-cell (41) and/or a proton exchange membrane fuel cell (42) and/or an ammonia fuel cell (46).

9. The contrail reducing system of claim 7 or 8 claims, wherein the ice generator (9) comprises:
- a condenser and freezer surface (15) in thermal contact with the cold to condense and freeze the exhaust water (17), thereby transforming the exhaust water (17) into ice,
- an ice remover to mechanically remove the ice from the surface to form the pieces of ice.

10. The contrail reducing system of claim 9, wherein the ice remover is arranged to scrap the ice by moving a blade (16) over the surface (15).

11. The contrail reducing system of any one of claims 7 to 10, wherein the ice generator (9) comprises a snowmaking gun and/or an ice flake machine.

12. The contrail reducing system of any one of claims 7 to 11, further comprising:
- exhaust water storage to store condensed or melted exhaust water (17) in the form of one or more tanks (8),
- a release mechanism to release stored exhaust water (17) from the exhaust water storage into the atmosphere when the airplane (1) flies at low altitudes.

13. An airplane equipped with an electrical engine to drive the airplane, a fuel-cell for supplying the electrical engine, and a contrail reducing system of any one of claims 7 to 12.

## Patentansprüche

1. Verfahren zum Reduzieren von Kondensstreifen während eines Fluges eines Flugzeugs (1), wobei das Flugzeug (1) durch einen elektrischen Motor (2) angetrieben wird, der von einer Brennstoffzelle (4) versorgt wird, wobei das Verfahren während des Fluges an dem Flugzeug (1) bereitstellt:
Umwandeln von Abgaswasser (17), das von der Brennstoffzelle (4) erzeugt wird, unter Verwendung von Kälte in Eisstücke (6), wobei die Kälte während des Fluges aus einem atmosphärischen Luftstrom um das Flugzeug (1) herum entnommen wird;
Freisetzen der Eisstücke (6) aus dem Flugzeug in die Atmosphäre während des Fluges;
wobei die Eisstücke (6) eine Größe aufweisen, die ausreichend ist, damit sie in Richtung der unteren Atmosphäre hinabfallen, anstatt in der Atmosphäre auf einer Höhe zu verbleiben, auf der das Flugzeug (1) fliegt.

2. Verfahren nach Anspruch 1, wobei die Brennstoffzelle (4) eine Wasserstoff-Brennstoffzelle (41) und/oder eine Protonenaustausch-Membran-Brennstoffzelle (42) und/oder eine Ammoniak-Brennstoffzelle (46) umfasst.

3. Verfahren nach einem der vorhergehenden Ansprüche, wobei das Umwandeln des Abgaswassers (17) in die Eisstücke (6) umfasst:
Kondensieren und Gefrieren des Abgaswassers (17) an einer Kondensator- und Gefrierfläche (15), die in thermischem Kontakt mit der Kälte steht, wodurch das Abgaswasser (17) in Eis umgewandelt wird;
Erzeugen der Eisstücke (6) durch mechanisches Entfernen des Eises von der Fläche (15), wodurch die Eisstücke gebildet werden.

4. Verfahren nach Anspruch 3, wobei das mechanische Entfernen des Eises von der Fläche (15) durch Abschaben des Eises unter Verwendung einer Klinge (16) durchgeführt wird, die sich über die Fläche (15) bewegt.

5. Verfahren nach einem der vorhergehenden Ansprüche, wobei das Umwandeln des Abgaswassers (17) in die Eisstücke (6) basierend auf Schneekanonen-Technologie und/oder Eisflockenmaschinen-Technologie durchgeführt wird.

6. Verfahren nach einem der vorhergehenden Ansprüche, ferner umfassend:
zusätzlich zum Gefrieren des Abgaswassers (17), Speichern von kondensiertem oder geschmolzenem Abgaswasser (17) in einem oder mehreren Tanks (8), die von dem Flugzeug (1) umfasst sind, Freisetzen wenigstens eines Teils des in dem einen oder den mehreren Tanks (8) gespeicherten Wassers aus dem Flugzeug (1) in die Atmosphäre während des Fluges, wenn das Flugzeug (1) in niedrigen Höhen fliegt.

7. Kondensstreifen-Reduzierungssystem, umfassend
einen Eisgenerator (9), der geeignet ist, in einem Flugzeug (1) installiert zu werden, zum Umwandeln von Abgaswasser (17), das von einer Brennstoffzelle (4) des Flugzeugs (1) erzeugt wird, in Eisstücke (6) während eines Fluges des Flugzeugs (1), unter Verwendung von Kälte, die während des Fluges aus dem atmosphärischen Luftstrom um das Flugzeug (1) herum entnommen wird;
einen Eisstück-Freisetzer (19), der geeignet ist, durch den Eisgenerator (9) erzeugte Eisstücke (6) aus dem Flugzeug (1) in die Atmosphäre während des Fluges freizusetzen;
wobei die Eisstücke (6) eine Größe aufweisen, die ausreichend ist, damit sie in Richtung der unteren Atmosphäre hinabfallen, anstatt in der Atmosphäre auf der Flughöhe zu verbleiben.

8. Kondensstreifen-Reduzierungssystem nach Anspruch 7, wobei die Brennstoffzelle (4) eine Wasserstoff-Brennstoffzelle (41) und/oder eine Protonenaustausch-Membran-Brennstoffzelle (42) und/oder eine Ammoniak-Brennstoffzelle (46) umfasst.

9. Kondensstreifen-Reduzierungssystem nach Anspruch 7 oder 8, wobei der Eisgenerator (9) umfasst:
eine Kondensator- und Gefrierfläche (15), die in thermischem Kontakt mit der Kälte steht, um das Abgaswasser (17) zu kondensieren und zu gefrieren, wodurch das Abgaswasser (17) in Eis umgewandelt wird;
einen Eisentferner zum mechanischen Entfernen des Eises von der Fläche, um die Eisstücke zu bilden.

10. Kondensstreifen-Reduzierungssystem nach Anspruch 9, wobei der Eisentferner dazu eingerichtet ist, das Eis durch Bewegen einer Klinge (16) über die Fläche (15) abzuschaben.

11. Kondensstreifen-Reduzierungssystem nach einem der Ansprüche 7 bis 10, wobei der Eisgenerator (9) eine Schneekanone und/oder eine Eisflockenmaschine umfasst.

12. Kondensstreifen-Reduzierungssystem nach einem der Ansprüche 7 bis 11, ferner umfassend:
einen Abgaswasserspeicher zum Speichern von kondensiertem oder geschmolzenem Abgaswasser (17) in Form eines oder mehrerer Tanks (8);
einen Freisetzungsmechanismus zum Freisetzen von gespeichertem Abgaswasser (17) aus dem Abgaswasserspeicher in die Atmosphäre, wenn das Flugzeug (1) in niedrigen Höhen fliegt.

13. Flugzeug, ausgestattet mit einem elektrischen Motor zum Antreiben des Flugzeugs, einer Brennstoffzelle zum Versorgen des elektrischen Motors und einem Kondensstreifen-Reduzierungssystem nach einem der Ansprüche 7 bis 12.

## Revendications

1. Méthode de réduction des traînées de condensation lors d'un vol d'un avion (1), l'avion (1) étant propulsé par un moteur électrique (2) alimenté par une pile à combustible (4), la méthode prévoyant, pendant le vol à l'avion (1) :
- la transformation, en utilisant du froid, de l'eau d'échappement (17) produite par la pile à combustible (4) en morceaux de glace (6), le froid étant extrait du flux d'air atmosphérique autour de l'avion (1) pendant le vol ;
- la libération, pendant le vol, des morceaux de glace (6) de l'avion dans l'atmosphère ;
- dans laquelle les morceaux de glace (6) ont une taille suffisante pour tomber vers la basse atmosphère plutôt que de rester dans l'atmosphère à une hauteur à laquelle l'avion (1) vole.

2. Méthode selon la revendication 1, dans laquelle la pile à combustible (4) comprend une pile à combustible à hydrogène (41) et/ou une pile à combustible à membrane échangeuse de protons (42) et/ou une pile à combustible à ammoniaque (46).

3. Méthode selon l'une quelconque des revendications précédentes, dans laquelle la transformation de l'eau d'échappement (17) en morceaux de glace (6) comprend :
- la condensation et le gel de l'eau d'échappement (17) sur une surface de condenseur et de congélateur (15) en contact thermique avec le froid, transformant ainsi l'eau d'échappement (17) en glace ;
- la génération des morceaux de glace (6) en retirant mécaniquement la glace de la surface (15) et formant ainsi les morceaux de glace.

4. Méthode selon la revendication 3, dans laquelle le retrait mécanique de la glace de la surface (15) est réalisé en raclant la glace à l'aide d'une lame (16) se déplaçant sur la surface (15).

5. Méthode selon l'une quelconque des revendications précédentes, dans laquelle la transformation de l'eau d'échappement (17) en morceaux de glace (6) est réalisée sur la base de la technologie des canons à neige et/ou de la technologie des machines à flocons de glace.

6. Méthode selon l'une quelconque des revendications précédentes, comprenant en outre :
- en plus de la congélation de l'eau d'échappement (17), le stockage de l'eau d'échappement (17) condensée ou fondue dans un ou plusieurs réservoirs (8) compris dans l'avion (1),
- la libération, pendant le vol depuis l'avion (1), d'au moins une partie de l'eau stockée dans un ou plusieurs réservoirs (8) dans l'atmosphère lorsque l'avion (1) vole à basse altitude.

7. Système de réduction des traînées de condensation, comprenant
- un générateur de glace (9) conçu pour être installé dans un avion (1) pour transformer l'eau d'échappement (17) produite par une pile à combustible (4) de l'avion (1) en morceaux de glace (6) pendant un vol de l'avion (1) en utilisant le froid extrait du flux d'air atmosphérique autour de l'avion (1) pendant le vol ;
- un dispositif de libération de morceaux de glace (19) conçu pour libérer des morceaux de glace (6) produits par le générateur de glace (9) de l'avion (1) dans l'atmosphère pendant le vol ;
- dans lequel les morceaux de glace (6) ont une taille suffisante pour tomber vers la basse atmosphère plutôt que de rester dans l'atmosphère à la hauteur de vol.

8. Système de réduction des traînées de condensation selon la revendication 7, dans lequel la pile à combustible (4) comprend une pile à combustible à hydrogène (41) et/ou une pile à combustible à membrane échangeuse de protons (42) et/ou une pile à combustible à ammoniaque (46).

9. Système de réduction des traînées de condensation selon la revendication 7 ou 8, dans lequel le générateur de glace (9) comprend :
- une surface de condenseur et de congélation (15) en contact thermique avec le froid pour condenser et congeler l'eau d'échappement (17), transformant ainsi l'eau d'échappement (17) en glace,
- un dispositif d'élimination de glace pour retirer mécaniquement la glace de la surface afin de former des morceaux de glace.

10. Système de réduction des traînées de condensation selon la revendication 9, dans lequel le dispositif d'élimination de glace est conçu pour racler la glace en déplaçant une lame (16) sur la surface (15).

11. Système de réduction des traînées de condensation selon l'une quelconque des revendications 7 à 10, dans lequel le générateur de glace (9) comprend un canon à neige et/ou une machine à flocons de glace.

12. Système de réduction des traînées de condensation selon l'une quelconque des revendications 7 à 11, comprenant en outre :
- le stockage de l'eau d'échappement pour stocker l'eau d'échappement (17) condensée ou fondue sous la forme d'un ou plusieurs réservoirs (8),
- un mécanisme de libération pour libérer l'eau d'échappement (17) stockée du réservoir d'eau d'échappement dans l'atmosphère lorsque l'avion (1) vole à basse altitude.

13. Avion équipé d'un moteur électrique pour entraîner l'avion, d'une pile à combustible pour alimenter le moteur électrique, et d'un système de réduction de traînée de condensation selon l'une quelconque des revendications 7 à 12.
